# EUROPÄISCHE PATENTSCHRIFT

(11) **EP 3 625 785 B1**
(45) Veröffentlichungstag und Bekanntmachung des Hinweises auf die Patenterteilung: **26.11.2025**
(21) Anmeldenummer: 18723780.5
(22) Anmeldetag: 03.05.2018
(51) Int. Cl.: G08G 1/01

(54) **VERFAHREN ZUM ERZEUGEN EINER ÜBERHOLWAHRSCHEINLICHKEITSSAMMLUNG, VERFAHREN ZUM BETREIBEN EINER STEUEREINRICHTUNG EINES KRAFTFAHRZEUGS, ÜBERHOLWAHRSCHEINLICHKEITSSAMMELEINRICHTUNG UND STEUEREINRICHTUNG**
METHOD FOR PRODUCING A PASSING PROBABILITY COLLECTION, METHOD FOR OPERATING A CONTROL DEVICE OF A MOTOR VEHICLE, PASSING PROBABILITY COLLECTING DEVICE AND CONTROL DEVICE
PROCÉDÉ POUR GÉNÉRER UNE COMPILATION DE PROBABILITÉS DE DÉPASSEMENT, PROCÉDÉ POUR FAIRE FONCTIONNER UN DISPOSITIF DE COMMANDE D'UN VÉHICULE À MOTEUR, DISPOSITIF DE COMPILATION DE PROBABILITÉS DE DÉPASSEMENT ET DISPOSITIF DE COMMANDE

(30) Priorität: 15.05.2017 DE 102017208168
(43) Veröffentlichungstag der Anmeldung: 25.03.2020
(73) Patentinhaber: Schaeffler Technologies AG & Co. KG, 91074 Herzogenaurach (DE)
(72) Erfinder: GRUBWINKLER, Stefan, 84323 Massing (DE)
(74) Vertreter: Schaeffler Technologies
(86) Internationale Anmeldenummer: PCT/EP2018/061424
(87) Internationale Veröffentlichungsnummer: WO 2018/210581

(56) Entgegenhaltungen:
- EP-A1- 1 591 754
- EP-A1- 2 479 077
- WO-A1-2006/037360
- WO-A1-2015/052577
- DE-A1- 102014 008 380
- WILDE, ANDREAS: "ine modulare Funktionsarchitektur für adaptives und vorausschauendes Energiemanagement in Hybridfahrzeugen [A Modular Function Architecture for Adaptive and Predictive Energy Management in Hybrid Electric Vehicles]", INFORMATIK - FORSCHUNG UND ENTWICKLUNG, 1 January 2010 (2010-01-01), Berlin/Heidelberg, pages 45 - 57, XP055494082, Retrieved from the Internet <URL:https://mediatum.ub.tum.de/doc/679109/679109.pdf> [retrieved on 20180720], DOI: 10.1007/s00450-007-0028-y

## Beschreibung

Die Erfindung betrifft ein Verfahren zum Erzeugen einer Überholwahrscheinlichkeitssammlung und eine Überholwahrscheinlichkeitssammeleinrichtung mit einer dementsprechenden Überholwahrscheinlichkeitssammlung.

In dem Dokument EP 1591754 A1 wird ein System zum Berechnen eines Risikos bei Überholvorgängen offenbart, dass viele verschiedene Umfelddaten analysiert und zur Berechnung einer Überholwahrscheinlichkeit, die ein Maß für das Risiko bei einem Überholvorgang darstellt, nutzt. Die Menge an Daten, die zur Berechnung der Überholwahrscheinlichkeit genutzt werden muss, benötigt ein relativ leistungsstarkes Rechensystem zu deren Verarbeitung.

Vorliegend ist ein grundlegender Gedanke, dass bei modernen Hybridfahrzeugen als Komfortfunktion Überholvorgänge üblicherweise durch das Hinzuschalten einer Elektromaschine bzw. einem zusätzlichen elektrischen Moment unterstützt werden. Für die Betriebsstrategie ist es wichtig, die Überholvorgänge vorherzusagen, da somit rechtzeitig vor dem Überholvorgang das Moment der elektrischen Maschine reduziert werden kann, so dass zu Beginn des Überholvorgangs ein ausreichend hohes Moment der elektrischen Maschine zur Verfügung steht. Weiterhin kann durch die Vorhersage ermöglicht werden, dass die elektrische Maschine während des Überholvorgangs nicht überhitzt und ein Energieinhalt eines elektrischen Energiespeichers des Fahrzeugs für den Überholvorgang ausreichend ist.

Die Dissertation von Andreas Wilde mit dem Titel "Eine modulare Funktionsarchitektur für adaptives und vorausschauendes Energiemanagement in Hybridfahrzeugen", Technische Universität München, 2010, stellt eine Methode vor, mit der die Effizienz von Hybridfahrzeugen unter Aufrechterhaltung und Verbesserung der Fahrleistungen weiter gesteigert werden kann, indem die Betriebsstrategieparameter automatisch abhängig von der aktuellen und zukünftigen Fahrsituation gewählt werden.

Aus der DE 10 2014 008 380 A1 ist ein Verfahren zur prädiktiven Steuerung und/oder Regelung eines Antriebsstranges eines Fahrzeuges bekannt, wobei unter Anderem Informationen zu Fahrverhalten auf einer Fahrstrecke erfasst und gespeichert werden.

Die WO 2015/052577 A1 offenbart ein Leitsystem für Fahrspuren, bei welchem Überholwahrscheinlichkeiten berücksichtigt werden.

Üblicherweise werden Überholvorgänge durch Auswertung von fahrzeuginternen Sensorsignalen, wie beispielsweise Betätigung des Blinkers, Lenkwinkel, Rückschalten in einen niedrigeren Gang, Abstand zum vorausfahrenden Fahrzeug oder Relativgeschwindigkeit bezüglich des vorausfahrenden Fahrzeugs vorhergesagt. Diese fahrzeuginternen Signale werden dazu genutzt, eine Überholwahrscheinlichkeit zu berechnen. Auf Basis dieser Überholwahrscheinlichkeit wird die Betriebsstrategie des Hybridfahrzeugs angepasst.

Es ist Aufgabe der vorliegenden Erfindung, eine Möglichkeit aufzuzeigen, bei welcher eine Überholwahrscheinlichkeitssammlung zuverlässiger erzeugt wird und/oder ein Kraftfahrzeug sicherer betrieben werden kann.

Die Aufgabe wird durch das Verfahren und eine Überholwahrscheinlichkeitssammeleinrichtung gemäß den unabhängigen Ansprüchen gelöst.

Der Erfindung liegt die Erkenntnis zu Grunde, dass Überholvorgänge von Kraftfahrzeugen individuell durchgeführt werden. So unterscheidet sich eine Überholgewohnheit eines Fahrers des Kraftfahrzeugs beispielsweise von einer Überholgewohnheit eines anderen Fahrers eines weiteren Kraftfahrzeugs. Diese Überholgewohnheit kann ferner von der Situation des Fahrers abhängen und auch von der Verkehrsdichte; ein Fahrer kann am Wochenende weniger geneigt sein, zu überholen, als an Werktagen auf dem Weg zur Arbeit, wobei ferner fahrerindividuell auch die Überholneigung von Verkehrsdichten abhängig sei kann. Es wird ferner beispielsweise Streckenabschnitte geben, an denen nur wenige Kraftfahrzeuge überholen und es wird auch Streckenabschnitte geben, an denen relativ viele Kraftfahrzeuge überholen. Ausschließlich anhand von Kartendaten ist diese Information nicht mit hoher Präzision zu erfassen. In Karten sind üblicherweise keine Bebauungen und keine Sichtverhältnisse, wie sie sich durch Maisfelder oder Bäume ergeben können, angegeben. Vorliegend wird diese Information durch die Überwachung der Vielzahl der Kraftfahrzeuge gesammelt und zur Überholwahrscheinlichkeitssammlung, insbesondere einer Datenbank, hinzugefügt. Die Überholwahrscheinlichkeitssammlung wird vorliegend also empirisch erzeugt. Damit kann die Überholwahrscheinlichkeit individueller und präziser ermittelt werden.

Es wird der jeweilige Fahrverlauf erfasst. Das bedeutet beispielsweise, dass eine Fahrtrajektorie (Trajektorie relativ zur Strecke, Trajektorie relativ zum überholten Fahrzeug und/oder zeitlicher Lenkwinkelverlauf) des jeweiligen Kraftfahrzeugs erfasst wird. Der Fahrverlauf kann aber beispielsweise auch dadurch erfasst werden, dass die jeweiligen Kraftfahrzeuge lediglich anhand von punktuell vorliegenden Positionen erfolgt werden und dabei festgestellt wird, dass sich ein Kraftfahrzeug vor (oder neben) das andere Kraftfahrzeug setzt. So können die Kraftfahrzeuge beispielsweise durch Identifikationsnummern, insbesondere von einer Mobilfunkeinheit des Kraftfahrzeugs oder eines Fahrers des Kraftfahrzeugs, erfasst werden. Der Fahrverlauf kann aber beispielsweise auch in Fernerkundungsdaten, beispielsweise in Luftbildern oder Satellitenbildern erfasst werden. Hierzu können die Kraftfahrzeuge beispielsweise aus den Bildern bzw. einer Bildsequenz extrahiert werden. Die Kraftfahrzeuge können beispielsweise auch mit Navigationssatellitenempfängern ausgestattet sein und ihre Position an eine Empfangseinrichtung übertragen. Anhand von mehreren Positionen kann dann der Fahrverlauf bestimmt werden.

Der Fahrverlauf kann ferner von einem weitere Fahrzeug erfasst werden, etwa mittels Sensordaten und/oder mittels eines Kamerasignals des weiteren Fahrzeugs, insbesondere ein dem überholenden Fahrzeug nachfolgendes Fahrzeug. Mit anderen Worten kann der Überholvorgang auch durch den Hintermann erfasst werden, etwa durch dessen Kamerasystem oder Sensoren, die insbesondere einem Fahrerassistenzsystem angehören und die in der Lage sind, ein Spurhalteverhalten bzw. Überholverhalten des vorausfahrenden Fahrzeugs zu ermitteln.

Das Bestimmen eines Überholvorgangs kann ergänzend oder alternativ auch durch Auswertung von Sensordaten von zumindest einem Sensor des jeweiligen Kraftfahrzeugs selbst erfolgen. So kann durch die Auswertung beispielsweise bestimmt werden, wann das jeweilige Kraftfahrzeug überholt und wann es nicht überholt. Die Sensordaten können dabei beispielsweise durch eine Gaspedalstellung, einen Lenkwinkel, einen Fahrtrichtungsanzeigerstatus und/oder einer Umgebungsinformation, insbesondere Radarsensordaten und/oder Laserscannerdaten und/oder Kamera, insbesondere Stereokamera, vorgegeben werden.

Es kann auch vorgesehen sein, dass die vom Kraftfahrzeug erfassten Sensordaten zur Auswertung an eine fahrzeugexterne Einrichtung, insbesondere eine Überholwahrscheinlichkeitssammeleinrichtung, oder an zumindest ein anderes Kraftfahrzeug gesendet werden. Es kann aber auch sein, dass die Auswertung im jeweiligen Kraftfahrzeug erfolgt, in welchem die Sensordaten erfasst werden, und vorzugsweise lediglich das Auswertungsergebnis an die fahrzeugexterne Einrichtung übertragen wird.

Die Vielzahl der Kraftfahrzeuge (nicht-überholende Fahrzeuge und überholende Fahrzeuge bzw. Fahrzeuge, deren eventueller Überholvorgang betrachtet wird) kann beispielsweise als Fahrzeugflotte vorliegen.

Anhand des jeweiligen Fahrverlaufs wird bestimmt, ob das jeweilige Kraftfahrzeug in diesem Streckenabschnitt ein anderes Kraftfahrzeug oder einen anderen Verkehrsteilnehmer überholt hat. Das kann beispielsweise dadurch festgestellt werden, indem die Reihenfolge von zwei Kraftfahrzeugen am Anfang des Streckenabschnitts erfasst wird und die Reihenfolge der zwei Kraftfahrzeuge nochmal am Ende des Streckenabschnitts erfasst wird. Falls sich die Reihenfolge geändert hat, kann das Kraftfahrzeug, welches sich zuerst an zweiter Stelle befunden hat und nun an erster Stelle befindet, d. h. an dem weiteren Kraftfahrzeug vorbeigefahren sein muss, der Klasse der überholenden Fahrzeuge zugeordnet werden. Falls sich die Reihenfolge der Kraftfahrzeuge in dem Streckenabschnitt nicht geändert hat, so wird das Kraftfahrzeug insbesondere der Klasse der nicht-überholenden Fahrzeuge zugeordnet.

Erfindungsgemäß wird zwischen der Anzahl der überholenden Fahrzeuge und der Anzahl der nicht-überholenden Fahrzeuge das Verhältnis bestimmt. Das Verhältnis ist insbesondere eine nummerische Relation zwischen der Anzahl der überholenden Fahrzeuge und der Anzahl der nicht-überholenden Fahrzeuge, also beispielsweise ein prozentualer Wert. Das Verhältnis kann aber auch abhängig von einem Gewichtungswert bestimmt werden.

Das Verhältnis gibt insbesondere Auskunft darüber wie viele Kraftfahrzeuge der Vielzahl der Kraftfahrzeuge in diesem Streckenabschnitt an dieser geographischen Position überholen. Das Verhältnis wird dann als die Überholwahrscheinlichkeit für diesen Streckenabschnitt in die Überholwahrscheinlichkeitssammlung eingetragen. Das Eintragen kann beispielsweise als Datenbankeintrag erfolgen.

Vorzugsweise ist es vorgesehen, dass beim Erfassen des jeweiligen Fahrverlaufs jeweils eine Tageszeit erfasst wird, zu welcher der jeweilige Fahrverlauf erfasst wird, und die Kraftfahrzeuge anhand der Tageszeit in Tageszeitklassen eingeteilt werden und jeweils ein tageszeitklassenabhängiges Verhältnis bestimmt wird und das jeweilige tageszeitklassenabhängige Verhältnis für den Streckenabschnitt in die Überholwahrscheinlichkeitssammlung eingetragen wird. Die Tageszeit ist dabei insbesondere eine Uhrzeit. Durch die Tageszeit kann aber auch ein bestimmter Tagesabschnitt oder aber ein Wochentag oder aber eine Jahreszeit oder aber eine vielfältige zeitliche Angabe vorgegeben sein. Durch das tageszeitabhängige Verhältnis kann beispielsweise ein tageszeitunterschiedliches Überholverhalten erfasst werden. So kann es beispielsweise sein, dass zu den Stoßzeiten mit hohem Verkehrsaufkommen, beispielsweise in der Früh und am Abend, wenn der Berufsverkehr seine Höhepunkte erreicht, öfter überholt wird als dies zu einer anderen Tageszeit der Fall ist. Das tageszeitklassenabhängige Verhältnis kann beispielsweise ergänzend oder alternativ zu dem zeitunabhängigen Verhältnis in die Überholwahrscheinlichkeitssammlung eingetragen werden.

Weiterhin ist es vorzugsweise vorgesehen, dass beim Erfassen des jeweiligen Fahrverlaufs jeweils ein Wetterverhältnis erfasst wird, zu welchem der jeweilige Fahrverlauf erfasst wird und die Kraftfahrzeuge anhand des Wetterverhältnis in Wetterverhältnisklassen eingeteilt werden und jeweils ein wetterverhältnisklassenabhängiges Verhältnis bestimmt wird und das jeweilige wetterverhältnisklassenabhängige Verhältnis für den Streckenabschnitt in die Überholwahrscheinlichkeitssammlung eingetragen wird. Durch das Wetterverhältnis wird beispielsweise eine Lufttemperatur, eine Fahrbahntemperatur, ein Regenzustand, ein Schneewetterzustand, ein Helligkeitszustand, ein Nebelverhältniszustand, ein Fahrbahnzustand, insbesondere eine nasse Fahrbahn oder eine überfrierende Fahrbahn, beschrieben. Vorzugsweise gibt es mehrere Wetterverhältnisklassen, in welchem die erfassten Kraftfahrzeuge eingeteilt werden können. Das wetterverhältnisklassenabhängige Verhältnis kann wiederum ergänzend oder alternativ zu dem Verhältnis ohne Abhängigkeit zu dem Wetterverhältnis in die Überholwahrscheinlichkeitssammlung eingetragen werden.

Weiterhin ist es vorzugsweise vorgesehen, dass beim Erfassen des jeweiligen Fahrverlaufs jeweils ein Sichtverhältnis erfasst wird, zu welchem der jeweilige Fahrverlauf erfasst wird, und die Kraftfahrzeuge anhand des Sichtverhältnis in Sichtverhältnisklassen eingeteilt werden und jeweils ein sichtverhältnisklassenabhängiges Verhältnis bestimmt wird und das jeweilige sichtverhältnisklassenabhängiges Verhältnis bestimmt wird und das jeweilige sichtverhältnisklassenabhängige Verhältnis für den Streckenabschnitt in die Überholwahrscheinlichkeitssammlung eingetragen wird. Durch das Sichtverhältnis wird beschrieben, wie weit ein Fahrer des Kraftfahrzeugs bei dem aktuellen Umgebungszustand in die Ferne sehen kann. So beeinträchtigt beispielsweise das Vorhandensein von Nebel die Sichtweite, weswegen ein Kraftfahrzeug, das bei Nebel überholt, beispielsweise in eine andere Sichtverhältnisklasse eingeteilt wird, als ein Kraftfahrzeug, welches bei nebelfreien Sichtverhältnissen überholt. Die Sichtverhältnisse können sich beispielsweise auch durch unterschiedliche Helligkeiten, Regen, Schneefall oder Lichteinflüsse unterscheiden. Das Sichtverhältnis kann auch beschreiben, wieweit ein Umgebungserfassungssensor eines Kraftfahrzeugs fähig ist den Umgebungsbereich zu erfassen.

Weiterhin ist es vorzugsweise vorgesehen, dass der jeweilige Fahrverlauf der Vielzahl der Kraftfahrzeuge an mehreren verschiedenen Streckenabschnitten an verschiedenen geographischen Positionen erfasst wird und eine Mehrzahl der Verhältnisse für die verschiedenen Streckenabschnitte bestimmt wird und eine Überholwahrscheinlichkeitskarte mit der Mehrzahl der Verhältnisse in den verschiedenen geographischen Positionen erzeugt wird. Durch die Überholwahrscheinlichkeitskarte kann die Mehrzahl der Verhältnisse als Überholwahrscheinlichkeiten visualisiert werden. Weiterhin kann durch die Überholwahrscheinlichkeitskarte zumindest ein Attribut zumindest eines Geoinformationssystems zu den Überholwahrscheinlichkeiten hinzugefügt werden. So kann beispielsweise ein Straßenattribut zu der Überholwahrscheinlichkeitskarte hinzugefügt werden. Das Straßenattribut kann dann beispielsweise beschreiben, welche Straßenkategorie der Streckenabschnitt zugeordnet ist oder aber in welchem baulichen Zustand sich der Streckenabschnitt befindet. So kann der Streckenabschnitt beispielsweise eine beschädigte Fahrbahn aufweisen oder aber sich in Bau bzw. im Instandsetzungszustand befinden. Durch die Überholwahrscheinlichkeitskarte wird insbesondere eine allgemeine Überholwahrscheinlichkeit bereitgestellt. Das bedeutet, wenn ein Kraftfahrzeug beispielsweise auf einen in der Überholwahrscheinlichkeitskarte enthaltene Streckenabschnitt bewegt wird, so kann dafür die Überholwahrscheinlichkeit ausgegeben werden, welche aktuell für das Kraftfahrzeug an der aktuellen Position ausgehend von der Überholwahrscheinlichkeitskarte vorliegt. Wo sich das Kraftfahrzeug in der Überholwahrscheinlichkeitskarte befindet kann beispielsweise anhand eines GNSS-Empfängers (GNSS - global navigation satellite system) bestimmt werden.

Es ist auch möglich, dass ein individuelles Überholverhalten eines Fahrers eines Kraftfahrzeugs mit den, insbesondere übrigen, Überholwahrscheinlichkeiten der Überholwahrscheinlichkeitssammlung verglichen wird und der Fahrer anhand des Vergleichs einer, insbesondere ortsunabhängigen, Überholwahrscheinlichkeitsklasse mit einem fahrklassenspezifischen Fahrstilwert, welcher eine Risikobereitschaft des Fahrers bei einem Überholvorgang beschreibt, zugewiesen wird. So kann dem Fahrer beispielsweise der Fahrstilwert zugewiesen werden, indem sein aktuelles Fahrverhalten bzw. Überholverhalten mit den Überholwahrscheinlichkeiten aus der Überholwahrscheinlichkeitssammlung verglichen wird. Befährt der Fahrer beispielsweise den Streckenabschnitt an der geographischen Position, so kann erkannt werden, wie sich der Fahrer gegenüber den Kraftfahrzeugen aus der Überholwahrscheinlichkeitssammlung verhält. Wird dies dann insbesondere an mehreren verschiedenen Streckenabschnitten verglichen, so kann der Fahrer einer ortsunabhängigen Überholwahrscheinlichkeitsklasse zugewiesen werden. Die Überholwahrscheinlichkeitsklasse gibt dann beispielsweise an, ob es sich um einen risikobereiten, d.h. überholfreudigen Fahrer, oder um einen sicherheitsbewussten, d.h. wenig überholfreudigen Fahrer, handelt. So kann es beispielsweise mehrere Überholwahrscheinlichkeitsklassen geben und jeder der Überholwahrscheinlichkeitsklassen ist insbesondere ein unterschiedlicher Fahrstil zugewiesen. Der Fahrstilwert beschreibt die Risikobereitschaft des Fahrers bei dem Überholvorgang. Der Fahrstilwert kann beispielsweise als Gewichtungsfaktor vorliegen. Mit dem Fahrstilwert kann die Überholwahrscheinlichkeit dann beispielsweise arithmetisch kombiniert werden. Vorteilhaft an dem Fahrstilwert ist, dass eine aktuelle Position des Kraftfahrzeugs für die Anwendung nicht mehr notwendig ist. Durch den Fahrstilwert kann der Fahrer beispielsweise als sicherheitsbewusster Fahrer eingestuft werden und das Kraftfahrzeug kann anhand dieser Einstufung für zukünftige Überholvorgänge betrieben werden. Die Position des Kraftfahrzeugs ist insbesondere lediglich beim Bestimmen des individuellen Überholverhaltens vorgesehen, um den Vergleich mit der Überholwahrscheinlichkeitssammlung durchzuführen. Der Fahrstilwert kann dann ortsunabhängig, also ohne Kenntnis der Position, genutzt werden.

Im Folgenden wird ein nicht beanspruchtes Verfahren zum Betreiben einer Steuereinrichtung eines Kraftfahrzeugs beschrieben. Im Gegensatz zum vorangehenden Verfahren, bei dem es um die Erhebung der Überholwahrscheinlichkeiten geht, betrifft das im Weiteren beschriebenen Verfahren in komplementärer Weise die Nutzung dieser gesammelten Daten zur Unterstützung eines Überholvorgangs. Bei diesem Verfahren wird eine Überholwahrscheinlichkeitskarte von dem Kraftfahrzeug eingelesen. Die Überholwahrscheinlichkeitskarte wird anhand einer Überholwahrscheinlichkeitssammlung mit zumindest einer eingetragenen Überholwahrscheinlichkeit erzeugt, insbesondere gemäß dem vorangehend beschriebenen Verfahren. Die Überholwahrscheinlichkeit wiederum wird anhand eines Verhältnisses zwischen überholenden Fahrzeugen und nicht-überholenden Fahrzeugen bestimmt, auch insbesondere gemäß dem vorangehend beschriebenen Verfahren. Abhängig von der Überholwahrscheinlichkeitskarte wird ein Steuersignal des Kraftfahrzeugs ausgegeben.

Das Einlesen der Überholwahrscheinlichkeitskarte kann beispielsweise von einem kraftfahrzeuginternen Speicher aus erfolgen, in welchem die Überholwahrscheinlichkeitskarte gespeichert ist. Die Überholwahrscheinlichkeitskarte kann aber auch ausgehend von einem kraftfahrzeugexternen Server eingelesen werden, auf welchem die Überholwahrscheinlichkeitskarte gespeichert ist. Das Kraftfahrzeug ist dann vorzugsweise mit dem kraftfahrzeugexternen Server drahtlos gekoppelt.

Durch das Steuersignal kann dann beispielsweise ein Hinweis an einen Fahrer des Kraftfahrzeugs ausgegeben werden oder aber es kann ein Steuerungseingriff in zumindest eine Komponente eines Antriebsstrangs des Kraftfahrzeugs erfolgen.

Im Folgenden wird ein weiteres, nicht beanspruchtes Verfahren zum Betreiben einer Steuereinrichtung eines Kraftfahrzeugs beschrieben, bei welchem ein Fahrstilwert, d.h. ein numerischer Wert oder ein anderes, den Fahrstil charakterisierendes Symbol, von dem Kraftfahrzeug eingelesen wird, welcher anhand von einer Überholwahrscheinlichkeitssammlung mit zumindest einer eingetragenen Überholwahrscheinlichkeit erzeugt wird, wobei die Überholwahrscheinlichkeit anhand eines Verhältnisses zwischen überholenden Fahrzeugen und nicht-überholenden Fahrzeugen bestimmt wird um das Steuersignal des Kraftfahrzeugs abhängig von dem Fahrstilwert ausgegeben wird.

Der Fahrstilwert beschreibt wiederum eine Risikobereitschaft eines Fahrers des Kraftfahrzeugs bei einem Überholvorgang. Der Fahrstilwert kann beispielsweise wiederum von einem kraftfahrzeuginternen Speicher eingelesen werden oder aber von einer mit dem Kraftfahrzeugrad gekoppelten fahrzeugexternen Einrichtung.

Durch das Steuersignal kann dem Fahrer wiederum ein Hinweis ausgegeben werden oder aber es kann eine Komponente eines Antriebsstrangs des Kraftfahrzeugs abhängig von dem Steuersignal gesteuert werden.

Insbesondere kann das Kraftfahrzeug abhängig vom Steuersignal zumindest semiautonom betrieben werden.

Vorzugsweise ist es vorgesehen, dass durch das Steuersignal ein Zielladezustandswert und/oder eine Zieltemperatur eines Hauptenergiespeichers und/oder ein Zielantriebsmoment einer Antriebseinheit des Kraftfahrzeugs vorgegeben wird. Durch das Steuersignal kann beispielsweise der Zielladezustandswert oder zumindest ein Zielladezustandsbereich vorgegeben werden, so dass beispielsweise für ein bevorstehendes Überholmanöver ausreichend Energie zur Verfügung steht. So kann der Energiespeicher beispielsweise durch einen Verbrennungsmotor nachgeladen werden, damit dieser für den Überholvorgang ausreichend Energie für den Elektromotor bereitstellen kann oder das Kraftfahrzeug kann vor dem Überholvorgang sparsamer betrieben werden. Auch kann insbesondere die Zieltemperatur des Hauptenergiespeichers durch das Steuersignal vorgegeben werden. So kann das Kraftfahrzeug beispielsweise auch einen anhand der Überholwahrscheinlichkeitskarte und/oder des Fahrstilwerts erkannten und bevorstehenden Überholvorgang vorbereitet werden. Da beim Überholvorgang üblicherweise bis zu einem Maximum der zur Verfügung stehenden Leistung zumindest zeitweise abgerufen wird, ist es vonnöten, dass der Hauptenergiespeicher vor einem Überholvorgang eine Temperatur aufweist, welche unterhalb der Zieltemperatur bzw. eines Temperaturgrenzwerts liegt, damit die Energie für den Überholvorgang wie gewünscht bereitgestellt werden kann. Ergänzend oder alternativ kann auch das Zielantriebsmoment der Antriebseinheit und das Steuersignal vorgegeben werden, also insbesondere dann, wenn anhand der Überholwahrscheinlichkeitskarte und/oder des Fahrstilwerts ein Überholvorgang als bevorstehend erkannt wird.

Das Kraftfahrzeug ist insbesondere als Hybridfahrzeug mit einem Elektromotor und einem Verbrennungsmotor ausgebildet. Der Energiespeicher ist insbesondere für den Elektromotor vorgesehen. Die Antriebseinheit ist vorzugsweise als Elektromotor ausgebildet. Durch das Steuersignal kann das Kraftfahrzeug auf einen bevorstehenden Überholvorgang vorbereitet werden.

Weiterhin kann es vorgesehen sein, dass ein vorausfahrendes Zielfahrzeug durch das Kraftfahrzeug abhängig von dem Steuersignal überholt wird. So kann das Kraftfahrzeug auch derart durch das Steuersignal gesteuert werden, dass ein Überholvorgang zumindest teilweise von dem Steuersignal abhängt. Beispielsweise kann das Kraftfahrzeug zumindest semiautonom betrieben werden, d. h. es kann beispielsweise ein Eingriff in eine Beschleunigungseinrichtung oder eine Verzögerungseinrichtung des Kraftfahrzeugs mittels des Steuersignals erfolgen.

Beim Überholen kann ein Lenkwinkel und/oder ein Abstand zu dem Zielfahrzeug und/oder eine Aktivität einer Fahrtrichtungsanzeigeeinheit des Kraftfahrzeugs berücksichtigt werden. Durch die Auswertung von den weiteren fahrzeuginternen Signalen wie dem Lenkwinkel, dem Abstand und der Aktivität der Fahrtrichtungsanzeigeeinheit kann der Überholvorgang, welcher abhängig von der Überholwahrscheinlichkeitskarte und/oder dem Fahrstilwert durchgeführt wird, wiederum sicherer durchgeführt werden. Durch den Lenkwinkel und/oder den Abstand und/oder die Aktivität der Fahrtrichtungsanzeigeeinheit kann die Überholwahrscheinlichkeit nämlich angepasst werden und deswegen nochmal für die jeweilige aktuelle Situation genauer vorhergesagt werden.

Die Erfindung betrifft auch eine Überholwahrscheinlichkeitssammeleinrichtung mit einer nach dem erfindungsgemäßen Verfahren erzeugten Überholwahrscheinlichkeitssammlung. Die Überholwahrscheinlichkeitssammeleinrichtung ist insbesondere als fahrzeugexterner Server ausgebildet. Der Server kann beispielsweise aus mehreren verteilten Servereinheiten ausgebildet sein oder aber zentral als eine einzige Einheit vorliegen.

Die Überholwahrscheinlichkeitssammeleinrichtung weist insbesondere eine Schnittstelle auf, mit welcher zumindest ein Kraftfahrzeug eine drahtlose Kopplung bzw. Verbindung herstellen kann und über welche zumindest ein Teil der Daten der Überholwahrscheinlichkeitssammlung übertragen werden kann.

Die Überholwahrscheinlichkeitssammlung ist insbesondere als Datenbank ausgebildet.

Außerdem möglich ist eine Steuereinrichtung zum zumindest Vorbereiten eines Überholvorgangs eines Kraftfahrzeugs mit einem Hauptenergiespeicher und einer Antriebseinheit, welcher eine Schnittstelle aufweist, die dazu eingerichtet ist mit einem Steuersignal eines erfindungsgemäßen Verfahrens zum Betreiben einer Steuereinrichtung angesteuert zu werden.

Das Kraftfahrzeug ist vorzugsweise als Hybridfahrzeug mit einem Elektromotor und einem Verbrennungsmotor ausgebildet.

Vorteilhafte Ausführungen der erfindungsgemäßen Verfahren sind als vorteilhafte Ausführungen der Überholwahrscheinlichkeitssammeleinrichtung oder der Steuereinrichtung anzusehen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegeben Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert.

Es zeigen:
- Fig. 1: eine schematische Darstellung eines Ausführungsbeispiels eines erfindungsgemäßen Verfahrens zum Erzeugen einer Überholwahrscheinlichkeitssammlung;
- Fig. 2: eine schematische Darstellung des Verfahrens, bei welchem anhand der Überholwahrscheinlichkeitssammlung eine Überholwahrscheinlichkeitskarte erzeugt wird und/oder ein Fahrer eines Kraftfahrzeugs einer Überholwahrscheinlichkeitsklasse zugewiesen wird; und
- Fig. 3: eine schematische Darstellung eines Ausführungsbeispiels eines Verfahrens zum Betreiben einer Steuereinrichtung, durch welche ein Steuersignal abhängig von der Überholwahrscheinlichkeitskarte und/oder dem Fahrstilwert ausgegeben wird.

In den Figuren werden gleiche oder funktionsgleiche Elemente mit den gleichen Bezugszeichen versehen.

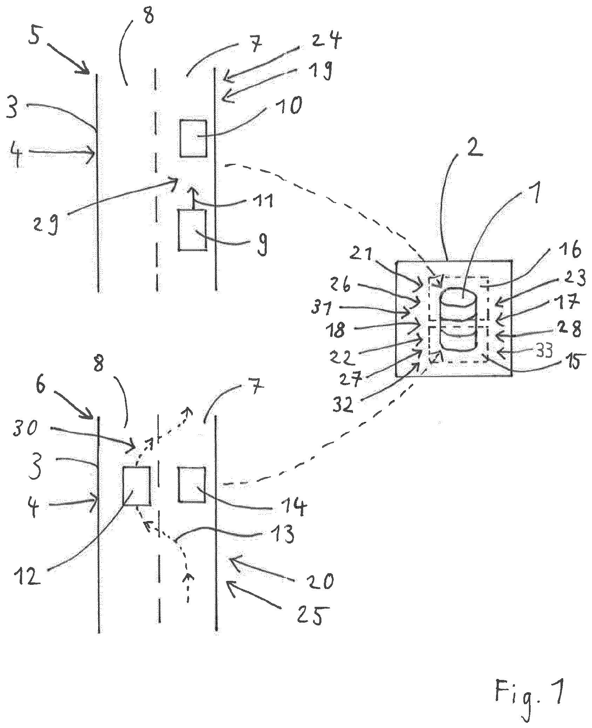

Fig. 1 zeigt beispielhaft eine Vorgehensweise zum Erzeugen einer Überholwahrscheinlichkeitssammlung 1. Die Überholwahrscheinlichkeitssammlung 1 ist insbesondere als Datenbank ausgebildet, beispielsweise als relationale Datenbank, und gemäß dem Ausführungsbeispiel in einer Überholwahrscheinlichkeitssammeleinrichtung 2 abgespeichert. Die Überholwahrscheinlichkeitssammeleinrichtung 2 ist beispielsweise als Server ausgebildet. Die Überholwahrscheinlichkeitssammeleinrichtung 2 kann dabei beispielsweise zentral oder verteilt ausgebildet sein, so dass diese verschiedene Teileinheiten aufweist, welche beispielsweise an verschiedenen geographischen Orten vorhanden sind. Die Überholwahrscheinlichkeitssammeleinrichtung 2 kann auch als Backend bezeichnet werden.

Es ist ein Streckenabschnitt 3 an einer geographischen Position 4 gezeigt. Der Streckenabschnitt 3 ist zu einem ersten Zeitpunkt 5 und zu einem zweiten Zeitpunkt 6 gezeigt. Gemäß dem Ausführungsbeispiel ist der erste Zeitpunkt 5 von dem zweiten Zeitpunkt 6 verschieden. Der Streckenabschnitt 3 ist insbesondere ein beliebiger Straßenabschnitt, welcher beispielsweise wie im Ausführungsbeispiel gezeigt eine erste Fahrspur 7 und eine zweite Fahrspur 8 aufweist. Die erste Fahrspur 7 und die zweite Fahrspur 8 können für entgegengesetzten Verkehr oder auch gleichgerichteten Verkehr ausgebildet sein.

In dem Streckenabschnitt 3 zum ersten Zeitpunkt 5 ist ein erstes Kraftfahrzeug 9 gezeigt. Weiterhin ist in dem Streckenabschnitt 3 zum ersten Zeitpunkt 5 ein erstes Zielfahrzeug 10 gezeigt. Das erste Zielfahrzeug 10 ist vor dem ersten Kraftfahrzeug 9 angeordnet und wird gemäß dem Ausführungsbeispiel in dieselbe Richtung wie das Kraftfahrzeug 9 bewegt.

In dem ersten Kraftfahrzeug 9 wird ein erster Fahrverlauf 11 erfasst. Der erste Fahrverlauf 11 kann dabei beispielsweise eine Fahrtrajektorie des ersten Kraftfahrzeugs 9 sein oder aber lediglich ein Positionsverhältnis bzw. eine Reihenfolge zwischen dem ersten Kraftfahrzeug 9 und dem ersten Zielfahrzeug 10 sein. Anhand des ersten Fahrverlaufs 11 kann bestimmt werden, ob das erste Kraftfahrzeug 9 das erste Zielfahrzeug 10 überholt. Auf dem Streckenabschnitt 3 zum zweiten Zeitpunkt 6 fährt ein zweites Kraftfahrzeug 12. Das zweite Kraftfahrzeug 12 kann unterschiedlich oder identisch zu dem ersten Kraftfahrzeug 9 sein. Vorzugsweise ist das zweite Kraftfahrzeug 12 jedoch zum ersten Kraftfahrzeug 9 unterschiedlich. Das zweite Kraftfahrzeug 12 weist analog zum ersten Fahrverlauf 11 einen zweiten Fahrverlauf 13 auf. Anhand des zweiten Fahrverlaufs 13 wird erkannt, dass das zweite Kraftfahrzeug 12 ein zweites Zielfahrzeug 14 überholt.

Durch das erste Kraftfahrzeug 9 und das zweite Kraftfahrzeug 12 liegt eine Vielzahl von Kraftfahrzeugen vor. Es können aber auch mehrere Fahrverläufe von weiteren Kraftfahrzeugen auf dem Streckenabschnitt 3 erfasst werden.

Anhand des jeweiligen Fahrverlaufs 11, 13 werden die Kraftfahrzeuge 9, 12 dann entweder zu einer Klasse überholende Fahrzeuge 15 oder zu einer Klasse nicht-überholende Fahrzeuge 16 zugeordnet. Gemäß dem Ausführungsbeispiel von Fig. 1 wird das erste Kraftfahrzeug 9 beispielsweise der Klasse nicht-überholende Fahrzeuge 16 zugeordnet während das zweite Kraftfahrzeug 12 der Klasse überholende Fahrzeuge zugeordnet wird. Die Zuordnung zur jeweiligen Klasse 15, 16 erfolgt insbesondere in der Überholwahrscheinlichkeitssammeleinrichtung 2. Vorzugsweise nachdem die Fahrverläufe 11, 13 an die Überholwahrscheinlichkeitssammeleinrichtung 2 übertragen sind.

Die Zuordnung zur jeweiligen Klasse 15 kann aber auch im jeweiligen Kraftfahrzeug 9, 12 selbst erfolgen, so dass lediglich die jeweilige Klasse 15, 16 an die Überholwahrscheinlichkeitssammeleinrichtung 2 übertragen wird.

Insbesondere können die Kraftfahrzeuge 9, 12 mit der Überholwahrscheinlichkeitssammeleinrichtung 2 gekoppelt sein, um den jeweiligen Fahrverlauf 11, 13 oder aber die jeweilige Klasse 15, 16 zu übertragen.

Die Information über überholende Fahrzeuge 15 und nicht-überholende Fahrzeuge 16 kann aber beispielsweise auch anhand von Mobilfunkdaten oder sonstigen einen Überholvorgang zwischen Kraftfahrzeugen nachvollziehbaren Merkmalen bestimmt werden. Es kann also der Fall sein, dass die Kraftfahrzeuge 9, 12 gar nicht mehr mit der Überholwahrscheinlichkeitssammeleinrichtung 2 gekoppelt sind, da die Information über die Kraftfahrzeuge 9, 12 bezüglich ihres Überholstatus durch eine fahrzeugexterne Überwachung, beispielsweise durch Methoden der Fernerkundung, bezogen wird.

Zwischen den überholenden Fahrzeugen 15 und den nicht-überholenden Fahrzeugen 16 wird ein Verhältnis 17 bestimmt. Das Verhältnis 17 kann beispielsweise als ein prozentualer Wert vorliegen. Weiterhin wird das Verhältnis 17 als eine Überholwahrscheinlichkeit 18 für den Streckenabschnitt 3 in die Überholwahrscheinlichkeitssammlung 1 eingetragen. Vorzugsweise wird die Überholwahrscheinlichkeitssammlung 1 durch das erstmalige Eintragen der Überholwahrscheinlichkeit 18 erzeugt.

Ergänzend oder alternativ wird dann bei Erfassen des ersten Fahrverlaufs 11 eine erste Tageszeit 19 erfasst und beim Erfassen des zweiten Fahrverlaufs 13 wird eine zweite Tageszeit 20 erfasst. Die Tageszeiten 19, 20 können dabei beispielsweise Uhrzeiten oder Tagesabschnitte sein. Die erste Tageszeit 19 und die zweite Tageszeit 20 können gleich oder aber auch verschieden sein. Gemäß dem Ausführungsbeispiel sind die erste Tageszeit 19 und die zweite Tageszeit 20 verschieden, so dass die erste Tageszeit 19 in eine erste Tageszeitklasse 21 eingeteilt wird und die zweite Tageszeit 20 in eine zweite Tageszeitklasse 22 eingeteilt wird. Somit wird auch das erste Kraftfahrzeug 9 in die erste Tageszeitklasse 21 eingeteilt und das zweite Kraftfahrzeug 12 wird in die zweite Tageszeitklasse 22 eingeteilt. Anhand der Tageszeitklassen 21, 22 kann dann ein tageszeitklassenabhängiges Verhältnis 23 bestimmt werden. Das tageszeitklassenabhängige Verhältnis 23 kann als die Überholwahrscheinlichkeit 18 bestimmt werden oder als weitere Überholwahrscheinlichkeit, welche neben der Überholwahrscheinlichkeit 18 in die Überholwahrscheinlichkeitssammlung 1 eingetragen wird. Insbesondere kann dann für die verschiedenen Tageszeiten 19, 20 jeweils die Überholwahrscheinlichkeit 18 bzw. die tageszeitklassenabhängige Überholwahrscheinlichkeit bestimmt werden.

Weiterhin ergänzend oder alternativ wird beim Erfassen des ersten Fahrverlaufs 11 zusätzlich ein erstes Wetterverhältnis 24 erfasst. Während beim Erfassen des zweiten Fahrverlaufs 13 ein zweites Wetterverhältnis 25 erfasst wird. Die erfassten Fahrverläufe 11, 13 bzw. die erfassten Kraftfahrzeuge 9, 12 kommen dann anhand der Wetterverhältnisse 24, 25 in Wetterverhältnisklassen eingeteilt werden. So kann das erste Kraftfahrzeug 9 mit dem ersten Wetterverhältnis 24 beispielsweise in eine erste Wetterverhältnisklasse 26 eingeteilt werden und das zweite Kraftfahrzeug 12, welches beim zweiten Wetterverhältnis 25 erfasst wird, kann in eine zweite Wetterverhältnisklasse 27 eingeteilt werden. Anhand der Wetterverhältnisklassen 26, 27 kann dann analog zum Verhältnis 17 ein wetterklassenabhängiges Verhältnis 28 bestimmt werden.

Analog zum tageszeitklassenabhängigen Verhältnis 23 kann das wetterverhältnisklassenabhängige Verhältnis 28 ebenfalls als die Überholwahrscheinlichkeit 18 in die Überholwahrscheinlichkeitssammlung eingetragen werden oder aber zusätzlich zu der Überholwahrscheinlichkeit 18 in die Überholwahrscheinlichkeitssammlung eingetragen werden.

Durch das Wetterverhältnis wird beispielsweise ein Regenzustand oder ein Grad eines Regenzustands oder ein Grad der Sonneneinstrahlung oder ein Außentemperaturstatus erfasst.

Weiter ergänzend oder alternativ wird beim Erfassen des jeweiligen Fahrverlaufs 11, 13 ein Sichtverhältnis miterfasst. So wird beispielsweise vom ersten Fahrverlauf 11 ein erstes Sichtverhältnis 29 miterfasst und beim zweiten Fahrverlauf 13 wird ein zweites Sichtverhältnis 30 miterfasst. Die Sichtverhältnisse 29, 30 werden dann zu den Tageszeiten 19, 20 und den Wetterverhältnissen 24, 25 in zumindest eine erste Sichtverhältnisklasse 31 oder eine zweite Sichtverhältnisklasse 32 eingeteilt. Weiterhin wird dann insbesondere in jeder der Sichtverhältnisklassen 31, 32 ein sichtverhältnisklassenabhängiges Verhältnis 33 bestimmt. Das sichtverhältnisklassenabhängiges Verhältnis 33 wird analog zum tageszeitklassenabhängigen Verhältnis 23 oder zum wetterverhältnisklassenabhängigen Verhältnis 28 bestimmt.

Durch die Sichtverhältnisse 29, 30 wird beschrieben, wie weit ein Fahrer des jeweiligen Kraftfahrzeugs 9, 12 die vor ihm liegende bzw. in Fahrtrichtung liegende Verkehrssituation oder den in Fahrtrichtung liegenden Umgebungsbereich einblicken kann und/oder darin Objekte, insbesondere Hindernisse erkennen kann. Das jeweilige Sichtverhältnis 29, 30 kann aber beispielsweise auch beschreiben wie weit ein Umgebungserfassungssensor des jeweiligen Kraftfahrzeugs 9, 12 eine in Fahrtrichtung des jeweiligen Kraftfahrzeugs 9, 12 liegende Umgebung hinsichtlich darin liegender Hindernisse erfassen kann. Ein Radarsensor ist beispielsweise in einer anderen Weise wetterempfindlich als dies beispielsweise eine Kamera im sichtbaren Spektralbereich ist.

Durch die Überholwahrscheinlichkeitssammlung 1 kann schließlich in dem Streckenabschnitt 3 angegeben werden, wie die Überholwahrscheinlichkeit 18 zahlenmäßig ist. Es kann also angegeben werden, wie wahrscheinlich es ist, dass ein Kraftfahrzeug, welches den Streckenabschnitt 3 passiert einen Überholvorgang ausführt. Die Überholwahrscheinlichkeit 18 kann insbesondere für die Tageszeitklassen 21, 22, die Wetterverhältnisklassen 26, 27 und die Sichtverhältnisklassen 31, 32 angegeben werden.

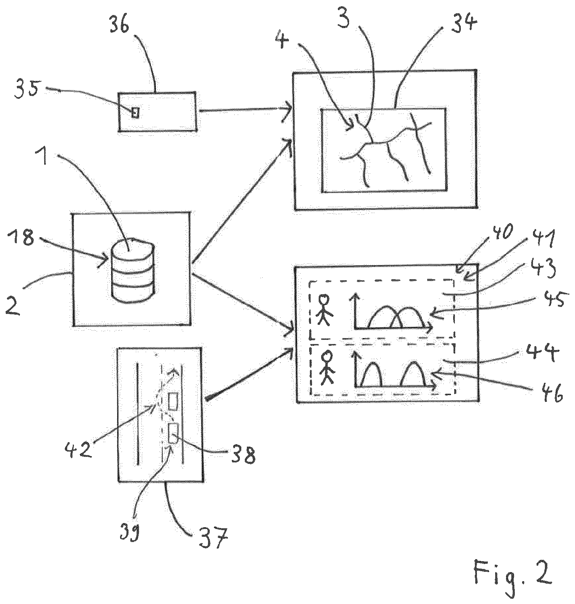

Insbesondere wird der jeweilige Fahrverlauf 11, 13 an mehreren verschiedenen Streckenabschnitten an verschiedenen geographischen Positionen erfasst. Aus einer daraus resultierenden Mehrzahl von Verhältnissen der überholenden Fahrzeugen 15 zu den nicht-überholenden Fahrzeugen 16 kann für die verschiedenen Streckenabschnitte - wie im Ausführungsbeispiel von Fig. 2 gezeigt - eine Überholwahrscheinlichkeitskarte 34 erzeugt werden.

Die Überholwahrscheinlichkeitskarte 34 steht als Sammlung zur Verfügung, bei welcher verschiedene Überholwahrscheinlichkeiten 18 an verschiedenen Streckenabschnitten 3 abhängig von ihrer geographischen Position eingetragen sind.

Beim Erzeugen der Überholwahrscheinlichkeitskarte 34 kann zumindest ein Attribut 35 eines Geoinformationssystems 36 zur Überholwahrscheinlichkeitskarte 34 hinzugefügt werden. Das Attribut 35 kann beispielsweise eine Straßenkategorie sein, welche den Streckenabschnitt 3 beschreibt. Das Attribut 35 kann aber sonst auch eine vielfältige andere Information über die Umgebung, durch welche der Streckenabschnitt 3 führt, sein. So kann das Attribut beispielsweise auch einen Straßenzustand, eine Bebauung oder eine Vegetation beschreiben. Das Attribut 35 umfasst beispielsweise auch die Anzahl der vorhandenen Fahrspuren.

Die Überholwahrscheinlichkeitskarte 34 kann dann beispielsweise durch die Überholwahrscheinlichkeitssammeleinrichtung 2 einem weiteren Kraftfahrzeug bereitgestellt werden.

Fig. 2 zeigt aber auch wie ein individuelles Überholverhalten 37 eines Fahrers 38 eines dritten Kraftfahrzeugs 39 erfasst und mit den Überholwahrscheinlichkeiten 18 verglichen wird. Das dritte Kraftfahrzeug 39 kann dabei identisch oder unterschiedlich zum ersten Kraftfahrzeug 9 oder zum zweiten Kraftfahrzeug 12 sein. Anhand des Vergleichs des Überholverhaltens 37 mit der Überholwahrscheinlichkeit 18 wird der Fahrer 38 einer ortsunabhängigen Überholwahrscheinlichkeitsklasse 40 zugewiesen. Vorzugsweise gibt es mehrere Überholwahrscheinlichkeitsklassen 40. Jede der Überholwahrscheinlichkeitsklassen 40 weist einen klassenspezifischen Fahrstilwert 41 auf. Der Fahrstilwert 41 beschreibt eine Risikobereitschaft des Fahrers 38 bei einem Überholvorgang 42. Der Fahrstilwert 41 kann beispielsweise als Gewichtungsfaktor vorgegeben werden.

Gemäß dem Ausführungsbeispiel von Fig. 2 wird der Fahrer 38 entweder einer ersten Überholwahrscheinlichkeitsklasse 43 oder einer zweiten Überholwahrscheinlichkeitsklasse 44 zugeordnet. Die erste Überholwahrscheinlichkeitsklasse 43 weist gemäß dem Ausführungsbeispiel einen ersten Fahrstilwert 45 auf und die zweite Überholwahrscheinlichkeitsklasse 44 weist einen zweiten Fahrstilwert 46 auf.

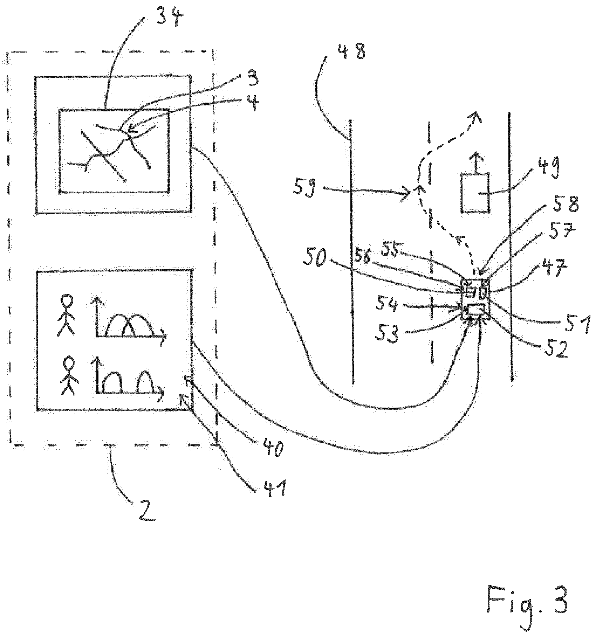

Fig. 3 zeigt ein viertes Kraftfahrzeug 47 auf einer Fahrbahn 48. Vor dem vierten Kraftfahrzeug 47 fährt ein drittes Zielfahrzeug 49.

Das vierte Kraftfahrzeug 47 weist einen Hauptenergiespeicher 50 und eine Antriebseinheit 51 auf. Gemäß dem Ausführungsbeispiel ist das vierte Kraftfahrzeug 47 als Hybridfahrzeug ausgebildet und die Antriebseinheit 51 ist als Elektromotor ausgebildet, welcher von dem Hauptenergiespeicher 50 mit Energie versorgt wird.

Weiterhin weist das vierte Kraftfahrzeug 47 eine Steuereinrichtung 52 auf. Die Steuereinrichtung 52 ist beispielsweise als Überholvorgangvorbereitungseinrichtung oder als Überholvorgangsassistenzvorrichtung ausgebildet. Die Steuereinrichtung 52 weist eine Schnittstelle 53 auf, welche mit einem Steuersignal 54 angesteuert werden kann.

Gemäß einem Ausführungsbeispiel wird beim Betreiben der Steuereinrichtung 52 die Überholwahrscheinlichkeitskarte 34 eingelesen und das Steuersignal 54 wird abhängig von der Überholwahrscheinlichkeitskarte 34 ausgegeben. Durch das Steuersignal 54 kann dann beispielsweise ein Hinweis im vierten Kraftfahrzeug 47 ausgegeben werden oder aber es kann steuernd in das vierte Kraftfahrzeug 47 eingegriffen werden.

Ergänzend oder alternativ kann die Steuereinrichtung 52 betrieben werden, indem der Fahrstilwert 41 eingelesen wird und das Steuersignal 54 abhängig von dem Fahrstilwert 41 ausgegeben wird.

Durch das Steuersignal, welches abhängig von der Überholwahrscheinlichkeitskarte 34 oder dem Fahrstilwert 31 ausgegeben wird, kann dann beispielsweise ein Zielladezustandswert 55 und/oder eine Zieltemperatur 56 des Hauptenergiespeichers 50 und/oder ein Zielantriebsmoment 57 der Antriebseinheit 51 vorgegeben werden.

So kann beispielsweise abhängig von der Überholwahrscheinlichkeitskarte und/oder dem Fahrstilwert erkannt werden, dass ein weiterer Fahrer 58 des vierten Kraftfahrzeugs 47 wahrscheinlich zu einem Überholvorgang 59 ansetzen möchte. Falls die Wahrscheinlichkeit zu dieser Annahme aufgrund der Überholwahrscheinlichkeitskarte, also wenn sich das vierte Kraftfahrzeug 47 auf dem Streckenabschnitt 3 mit der Geoposition 4 bewegt, und/oder des Fahrstilwerts 41, also der weitere Fahrer 58 ortsunabhängig eine beispielsweise überdurchschnittliche Neigung aufweist zu überholen, dann wird das Steuersignal 54 ausgegeben, um den Überholvorgang 59 vorzubereiten. Für das Vorbereiten des Überholvorgangs beispielsweise ist es sinnvoll, dafür zu sorgen, dass durch den Hauptenergiespeicher 50 genug Energie bereitsteht und der Hauptenergiespeicher 50 eine aktuelle Temperatur aufweist, welche eine Entnahme von Energie für den Überholvorgang in dem vorgesehenen Umfang zulässt. Durch das Steuersignal 54 kann beispielsweise auch bereits ein niedrigerer Gang eingelegt werden, um für den Überholvorgang 59 vorbereitet zu sein. Es kann aber auch das Zielantriebsmoment 57 der Antriebseinheit 51 vorgegeben werden, sodass die Antriebseinheit 51 für den Überholvorgang 59 vorbereitet ist.

Das vierte Kraftfahrzeug 47 kann unterschiedlich oder identisch zu bzw. mit dem dritten Kraftfahrzeug 39 oder dem ersten Kraftfahrzeug 9 oder dem zweiten Kraftfahrzeug 12 sein. Somit kann durch das Kraftfahrzeug 47 eine Anwendung der Überholwahrscheinlichkeitskarte 34 und/oder des Fahrstilwerts 41 erfolgen und gleichzeitig kann zum Bestimmen bzw. zum Anpassen der Überholwahrscheinlichkeit 18 beigetragen werden.

Das Steuersignal 54 wird also abhängig von einer erwarteten Überholwahrscheinlichkeit ausgegeben. Die erwartete Überholwahrscheinlichkeit wird beispielsweise mit zumindest einem Verfahren des maschinellen Lernens oder der Statistik bestimmt. Durch das Einbeziehen der Überholwahrscheinlichkeit 18 in das Vorbereiten oder Durchführen von Überholvorgängen 59 wird das Kraftfahrzeug 47 sicherer betrieben.

Die Bereitschaft in bestimmten Situationen zu überholen ist vom individuellen Fahrstil abhängig. Durch Berechnung der fahrerspezifischen Überholwahrscheinlichkeiten ist es möglich die Überholvorbereitungsmaßnahmen und/oder den Überholvorgang an das individuelle Fahrverhalten des weiteren Fahrers 58 anzupassen.

Ein weiterer Vorteil der Überholwahrscheinlichkeitssammlung 1 ist die Erhöhung der Vorausschauweite bzw. des Prädiktionshorizonts. Durch die üblicherweise verwendeten fahrzeuginternen Signale kann die Überholwahrscheinlichkeit nur kurz vor dem Überholvorgang bestimmt werden, was für eine Anpassung der Betriebsstrategie, z.B. Erhöhung des Ladezustands einer Traktionsbatterie, zu kurzfristig ist. Durch den durch die Überholwahrscheinlichkeitssammeleinrichtung2 bereitgestellten serverbasierten Ansatz können die Stellen bereits mehrere Kilometer im Voraus bestimmt werden, so dass die Komponenten im Antriebsstrang rechtzeitig angesteuert werden können.

## Patentansprüche

1. Computerimplementiertes Verfahren zum Erzeugen einer Überholwahrscheinlichkeitssammlung (1) mit folgenden Schritten:
- Erfassen eines jeweiligen Fahrverlaufs (11, 13) von einer Vielzahl von Kraftfahrzeugen (9, 12), welche zumindest einen Streckenabschnitt (3) an einer geographischen Position (4) passieren;
**gekennzeichnet durch** die Schritte:
- Zuordnen der jeweiligen Kraftfahrzeuge (9, 12) zu einer Klasse von überholenden Fahrzeugen (15) oder zu einer Klasse von nicht-überholenden Fahrzeugen (16) anhand des jeweiligen Fahrverlaufs (11, 13);
- Bestimmen eines Verhältnisses (17) zwischen einer Anzahl der überholenden Fahrzeuge (15) und einer Anzahl der nicht-überholenden Fahrzeuge (16); und
- Eintragen des Verhältnisses (17) als Überholwahrscheinlichkeit (18) für den Streckenabschnitt (3) an der geographischen Position (4) in die Überholwahrscheinlichkeitssammlung (1).

2. Verfahren nach Anspruch 1,
wobei
beim Erfassen des jeweiligen Fahrverlaufs (11, 13) jeweils eine Tageszeit (19, 20) erfasst wird, zu welcher der jeweilige Fahrverlauf (11, 13) erfasst wird, und die Kraftfahrzeuge (9, 12) anhand der Tageszeit (19, 20) in Tageszeitklassen (21, 22) eingeteilt werden und jeweils ein tageszeitklassenabhängiges Verhältnis (23) bestimmt wird und das jeweilige tageszeitklassenabhängige Verhältnis (23) für den Streckenabschnitt (3) in die Überholwahrscheinlichkeitssammlung (1) eingetragen wird.

3. Verfahren nach Anspruch 1 oder 2,
wobei
beim Erfassen des jeweiligen Fahrverlaufs (11, 13) jeweils ein Wetterverhältnis (24, 25) erfasst wird, zu welchem der jeweilige Fahrverlauf (11, 13) erfasst wird, und die Kraftfahrzeuge (9, 12) anhand des Wetterverhältnis (24, 25) in Wetterverhältnisklassen (26, 27) eingeteilt werden und jeweils ein wetterverhältnisklassenabhängiges Verhältnis (28) bestimmt wird und das jeweilige wetterverhältnisklassenabhängige Verhältnis (28) für den Streckenabschnitt (3) in die Überholwahrscheinlichkeitssammlung (1) eingetragen wird.

4. Verfahren nach einem der vorhergehenden Ansprüche,
wobei
beim Erfassen des jeweiligen Fahrverlaufs (11, 13) jeweils ein Sichtverhältnis (29, 30) erfasst wird, zu welchem der jeweilige Fahrverlauf (11, 13) erfasst wird, und die Kraftfahrzeuge (9, 12) anhand des Sichtverhältnis (29, 30) in Sichtverhältnisklassen (31, 32) eingeteilt werden und jeweils ein sichtverhältnisklassenabhängiges Verhältnis (33) bestimmt wird und das jeweilige sichtverhältnisklassenabhängige Verhältnis (33) für den Streckenabschnitt (3) in die Überholwahrscheinlichkeitssammlung (1) eingetragen wird.

5. Verfahren nach einem der vorhergehenden Ansprüche,
wobei
der jeweilige Fahrverlauf (11, 13) der Vielzahl der Kraftfahrzeuge (9, 12) an mehreren verschiedenen Streckenabschnitten (3) an verschiedenen geographischen Positionen (4) erfasst wird und eine Mehrzahl der Verhältnisse (17) für die verschieden Streckenabschnitte (3) bestimmt wird und eine Überholwahrscheinlichkeitskarte (34) mit der Mehrzahl der Verhältnisse (17) an den verschiedenen geographischen Positionen (4) erzeugt wird.

6. Überholwahrscheinlichkeitssammeleinrichtung (2) mit einer Überholwahrscheinlichkeitssammlung (1), welche gemäß einem Verfahren nach einem der Ansprüche 1 bis 5 erzeugt wird.

## Claims

1. Computer-implemented method for producing an overtaking probability collection (1), having the following steps:
- recording a respective driving characteristic (11, 13) from a multiplicity of motor vehicles (9, 12) passing through at least one route section (3) at a geographical position (4);
**characterized by** the steps of:
- assigning the respective motor vehicles (9, 12) to a class of overtaking vehicles (15) or to a class of non-overtaking vehicles (16) on the basis of the respective driving characteristic (11, 13);
- determining a ratio (17) between a number of the overtaking vehicles (15) and a number of the non-overtaking vehicles (16); and
- entering the ratio (17) into the overtaking probability collection (1) as an overtaking probability (18) for the route section (3) at the geographical position (4).

2. Method according to Claim 1,
wherein
the recording of the respective driving characteristic (11, 13) involves recording a respective time of day (19, 20) for which the respective driving characteristic (11, 13) is recorded, and the motor vehicles (9, 12) are categorized into time-of-day classes (21, 22) on the basis of the time of day (19, 20) and a respective time-of-day-class-dependent ratio (23) is determined and the respective time-of-day-class-dependent ratio (23) is entered into the overtaking probability collection (1) for the route section (3).

3. Method according to Claim 1 or 2,
wherein
the recording of the respective driving characteristic (11, 13) involves recording a respective weather condition (24, 25) for which the respective driving characteristic (11, 13) is recorded, and the motor vehicles (9, 12) are categorized into weather-condition classes (26, 27) on the basis of the weather condition (24, 25) and a respective weather-condition-class-dependent ratio (28) is determined and the respective weather-condition-class-dependent ratio (28) is entered into the overtaking probability collection (1) for the route section (3).

4. Method according to one of the preceding claims,
wherein
the recording of the respective driving characteristic (11, 13) involves recording a respective visibility (29, 30) for which the respective driving characteristic (11, 13) is recorded, and the motor vehicles (9, 12) are categorized into visibility classes (31, 32) on the basis of the visibility (29, 30) and a respective visibility-class-dependent ratio (33) is determined and the respective visibility-class-dependent ratio (33) is entered into the overtaking probability collection (1) for the route section (3).

5. Method according to one of the preceding claims,
wherein
the respective driving characteristic (11, 13) of the multiplicity of motor vehicles (9, 12) is recorded on multiple different route sections (3) at different geographical positions (4) and a plurality of the ratios (17) are determined for the different route sections (3) and an overtaking probability map (34) is produced using the plurality of ratios (17) at the different geographical positions (4).

6. Overtaking probability collecting device (2) having an overtaking probability collection (1) produced in accordance with a method according to one of Claims 1 to 5.

## Revendications

1. Procédé mis en œuvre par ordinateur pour générer une collection de probabilités de dépassement (1), comprenant les étapes suivantes :
- capture d'un tracé de déplacement (11, 13) respectif d'une pluralité de véhicules automobiles (9, 12) qui passent au niveau d'au moins un tronçon (3) à une position géographique (4) ;
**caractérisé par** les étapes suivantes :
- affectation des véhicules automobiles (9, 12) respectifs à une classe de véhicules dépassants (15) ou à une classe de véhicules ne dépassant pas (16) sur la base du tracé de déplacement (11, 13) respectif ;
- détermination d'un rapport (17) entre un nombre de véhicules dépassants (15) et un nombre de véhicules non dépassants (16) ; et
- enregistrement du rapport (17) en tant que probabilité de dépassement (18) pour le tronçon (3) à la position géographique (4) dans la collection de probabilités de dépassement (1).

2. Procédé selon la revendication 1,
lors de la capture du tracé de déplacement (11, 13) respectif, une heure (19, 20) à laquelle le tracé de déplacement (11, 13) respectif a été capturé étant respectivement capturée, et les véhicules automobiles (9, 12) étant répartis en classes d'heure (21, 22) à l'aide de l'heure (19, 20) et un rapport (23) dépendant de la classe d'heure étant respectivement déterminé et le rapport (23) dépendant de la classe d'heure respectif étant enregistré pour le tronçon (3) dans la collection de probabilités de dépassement (1).

3. Procédé selon la revendication 1 ou 2,
lors de la capture du tracé de déplacement (11, 13) respectif, une condition météorologique (24, 25) à laquelle le tracé de déplacement (11, 13) respectif a été capturé étant respectivement capturée, et les véhicules automobiles (9, 12) étant répartis en classes de condition météorologique (26, 27) à l'aide de la condition météorologique (24, 25) et un rapport (28) dépendant de la classe de condition météorologique étant respectivement déterminé et le rapport (28) dépendant de la condition météorologique respective étant enregistré pour le tronçon (3) dans la collection de probabilités de dépassement (1).

4. Procédé selon l'une des revendications précédentes, lors de la capture du tracé de déplacement (11, 13) respectif, une condition de visibilité (29, 30) à laquelle le tracé de déplacement (11, 13) respectif a été capturé étant respectivement capturée, et les véhicules automobiles (9, 12) étant répartis en classes de condition de visibilité (31, 32) à l'aide de la condition de visibilité (29, 30) et un rapport (33) dépendant de la classe de condition de visibilité étant respectivement déterminé et le rapport (33) dépendant de la condition de visibilité respective étant enregistré pour le tronçon (3) dans la collection de probabilités de dépassement (1).

5. Procédé selon l'une des revendications précédentes, le tracé de déplacement (11, 13) respectif de la pluralité de véhicules automobiles (9, 12) étant capturé au niveau de plusieurs tronçons (3) différents à différentes positions géographiques (4), et une pluralité de rapports (17) pour les différents tronçons (3) étant déterminés, et une carte de probabilité de dépassement (34) étant générée avec la pluralité de rapports (17) aux différentes positions géographiques (4).

6. Dispositif de collecte de probabilités de dépassement (2) comprenant une collection de probabilités de dépassement (1) qui est générée conformément à un procédé selon l'une des revendications 1 à 5.
